# EUROPÄISCHE PATENTANMELDUNG

(11) **EP 3 912 590 A1**
(43) Veröffentlichungstag der Anmeldung: **24.11.2021**
(21) Anmeldenummer: 20175542.8
(22) Anmeldetag: 19.05.2020
(51) Int. Cl.: A61C 8/00, A61C 13/00

(54) **DENTALIMPLANTAT AUS EINEM METALL ODER EINER METALLLEGIERUNG**

(71) Anmelder: Matthias Karl GmbH, 93449 Waldmünchen (DE)
(72) Erfinder: GROBECKER-KARL, Tanja, 66424 Homburg (DE)
(74) Vertreter: Dr. Gassner & Partner mbB

(57) **Zusammenfassung**

Dentalimplantat (1) zum Verankern einer Zahnprothese, wobei das Dentalimplantat (1) einen Kern (10) und ein den Kern (10) umgebendes Außengewinde (3) umfasst, wobei das Dentalimplantat (1) ein apikales Ende (11) und ein zervikales Ende (12) aufweist, um mit dem apikalen Ende (11) voran mittels des Außengewindes (3) in eine in einem Kieferknochen gebildete Ausnehmung eingeschraubt zu werden und um die Zahnprothese am zervikalen Ende (12) zu verankern, wobei das Dentalimplantat (1) aus Material besteht, welches ein Metall oder eine Metalllegierung umfasst oder daraus besteht, wobei der Kern (10) in einem beliebigen durch die gesamte Länge der Längsachse (L) geführten Querschnitt im Mittelbereich (4) des Dentalimplantats eine Ausbauchung (A) aufweist.

## Beschreibung

Die Erfindung betrifft ein Dentalimplantat aus einem Metall oder einer Metalllegierung zum Verankern einer Zahnprothese, wobei das Dentalimplantat einen Kern und ein den Kern umgebendes Außengewinde umfasst.

Ein derartiges Dentalimplantat ist aus der US 2012/0237898 A1 bekannt. Das bekannte Dentalimplantat offenbart einen länglichen Körperanteil an einem apikalen Anteil des Implantats und einen Nackenanteil an einem koronalen Anteil des Implantats. Ein erstes helikales Gewindeprofil befindet sich um einen ersten Anteil des länglichen Körpers an dem apikalen Anteil. Ein zweites helikales Gewindeprofil, welches sich vom ersten helikalen Gewindeprofil unterscheidet, verläuft um einen zweiten Anteil des länglichen Körpers, welcher sich zwischen dem ersten Anteil und dem Nackenanteil befindet. Das Implantat umfasst weiterhin ein drittes helikales Gewindeprofil, welches um den Nackenanteil verläuft und sich von den ersten und zweiten helikalen Gewindeprofilen unterscheidet. Das erste helikale Gewindeprofil kann dabei ein V-förmiges Gewindeprofil sein. Das zweite helikale Gewindeprofil kann so geformt sein, dass es zur apikalen Seite hin eine flache Oberfläche aufweist, wobei eine Normale zu der flachen Oberfläche im Allgemeinen parallel zur Längsachse des Implantats verläuft. Das zweite helikale Gewinde kann entlang der Längsachse eine progressive Gewindegeometrie aufweisen.

Aus der EP 2 401 982 A2 ist ein Dentalimplantat mit einem Körperabschnitt zum Einführen in eine Knochenstruktur mit einem sich daran einstückig anschließenden Befestigungsabschnitt bekannt, wobei der Körperabschnitt einen dünnen und kurzen Kern, entlang einer äußeren Umfangsfläche des Kerns ausgebildete Schraubklingen in Form einer breiten und tiefen Schraube und einen Verbindungsabschnitt umfasst. Ein Außenumfang eines proximalen Abschnitts und eines oberen Abschnitts des Körperabschnitts ist kleiner als ein maximaler Durchmesser des Körperabschnitts und der Befestigungsabschnitt ist kleiner als der maximale Durchmesser des Körperabschnitts.

Die US 2017/0354485 A1 offenbart ein Dentalimplantat mit einem Körper und einer Oberfläche mit einem Gewinde. Der Körper weist einen oberen Teil, einen mittleren Teil und einen unteren Teil auf. Der obere Teil des Körpers umfasst einen im Allgemeinen zylindrischen Bereich. Der untere Teil des Körpers umfasst einen im Allgemeinen sich nach innen verjüngenden Bereich. Der mittlere Teil des Körpers weist eine sich nach außen erstreckende Ausbuchtung auf. Ein maximaler Außendurchmesser der Ausbuchtung ist größer als ein maximaler Außendurchmesser des oberen Abschnitts und ein maximaler Außendurchmesser des unteren Abschnitts. Die ein Gewinde aufweisende Oberfläche befindet sich auf dem Körper mindestens innerhalb des oberen Teils des Körpers, der Ausbuchtung und des unteren Teils des Körpers. Die Form der Außenseite des Gewindes entspricht der Form der Oberfläche.

Die US 2015/0017605 A1 offenbart ein Zahnimplantat mit einem Schaft und einem Gewindeabschnitt, der spiralförmig auf dem Schaft angeordnet ist. Der Schaft umfasst einen ersten Abschnitt, der sich von einem ersten Ende zu einem zweiten Ende des Schafts erstreckt und einen zweiten Abschnitt der den ersten Abschnitt mit dem Ende verbindet. Ein Schaftdurchmesser eines Verbindungsabschnitts, an welchem der erste und der zweite Abschnitt verbunden sind, ist kleiner als derjenige des zweiten Abschnitts.

Die CN 106725932 A offenbart ein Implantatsystem mit geradem Abutment auf der Basis einer Titan-Zirkonium-Legierung. Das Implantatsystem umfasst einen Implantateinsatzabschnitt, der aus einem ersten Kegelstumpf, einer Quincunx-Säule und einem zweiten Kegelstumpf besteht. Der Verbindungsabschnitt der Zahnkrone ist mit dem Ende des ersten Kegelstumpfs mit großem Durchmesser verbunden. Das Ende des ersten Kegelstumpfs mit kleinem Durchmesser ist mit einem Ende der Quincunx-Säule verbunden. Das Implantat weist eine Doppelgewindestruktur auf, bei der ein Hauptgewinde und ein Nebengewinde miteinander kombiniert sind.

Aus der US 2017/0215995 A1 ist ein Zahnimplantat, gebildet aus einem Verankerungskörper, definiert zwischen einem apikalen Ende und einem zervikalen Ende, bekannt, wobei der Verankerungskörper ein Körper mit einer ersten vorbestimmten Länge ist und auf einer äußeren Oberfläche und entlang der gesamten ersten vorbestimmten Länge zumindest ein Gewinde aufweist. Dabei umfasst der Verankerungskörper auf zumindest einem koronaren Abschnitt des Implantats einen Abschnitt des zumindest einen Gewindes, welcher einen Nenndurchmesser aufweist, wobei der Nenndurchmesser größer ist als ein Außendurchmesser des Verankerungskörpers auf dem koronaren Abschnitt. Der Verankerungskörper kann eine konisch-zylindrische Form oder konische Form mit konvergierender Konizität zum apikalen Ende hin aufweisen.

Aufgabe der vorliegenden Erfindung ist es, ein alternatives Dentalimplantat bereitzustellen und ein Verfahren zu dessen Herstellung anzugeben.

Die Aufgabe wird durch die Merkmale der Patentansprüche 1 und 8 gelöst. Zweckmäßige Ausgestaltungen ergeben sich aus den Merkmalen der Patentansprüche 2 bis 7.

Erfindungsgemäß ist ein Dentalimplantat zum Verankern einer Zahnprothese vorgesehen, wobei das Dentalimplantat einen Kern und ein den Kern umgebendes Außengewinde umfasst, wobei das Dentalimplantat ein apikales Ende und ein zervikales Ende aufweist, um mit dem apikalen Ende voran mittels des Außengewindes in eine in einem Kieferknochen gebildete Ausnehmung eingeschraubt zu werden und um die Zahnprothese am zervikalen Ende zu verankern. Das Dentalimplantat besteht aus einem Material, welches ein Metall oder eine Metalllegierung umfasst oder aus einem Metall oder einer Metalllegierung besteht. In der Reihenfolge vom apikalen Ende zum zervikalen Ende umfasst das Dentalimplantat
- einen Spitzenbereich, in welchem das Außengewinde scharfkantig ausgebildet ist,
- einen sich an den Spitzenbereich anschließenden Mittelbereich, in welchem das Außengewinde trapezoidartig ausgebildet ist und
- einen sich an den Mittelbereich anschließenden Koronalbereich, in welchem das Außengewinde scharfkantig ausgebildet ist.

Durch den Spitzenbereich, den Mittelbereich und den Koronalbereich erstreckt sich eine Längsachse, wobei der Kern in einem beliebigen durch die gesamte Länge der Längsachse geführten Querschnitt im Mittelbereich eine Ausbauchung aufweist, während das Außengewinde einen Nenndurchmesser aufweist, welcher im gesamten Mittelbereich konstant ist oder im gesamten Mittelbereich in Richtung vom apikalen Ende zum zervikalen Ende hin zunimmt.

Unter dem Nenndurchmesser ist hier an jeder Position des Außengewindes der größte Durchmesser des Außengewindes, d. h. der Außendurchmesser des Außengewindes, zu verstehen. Dadurch dass der Nenndurchmesser im gesamten Mittelbereich konstant ist oder in Richtung vom apikalen Ende zum zervikalen Ende hin zunimmt, ist das Außengewinde in einem beliebigen durch die gesamte Länge der Längsachse geführten Querschnitt im Mittelbereich nicht ausgebaucht. Die Ausbauchung umfasst also das Außengewinde nicht. Das bedeutet, dass die Gewindetiefe des Außengewindes im Bereich der Ausbauchung geringer ist als im nicht ausgebauchten Spitzenbereich oder Koronalbereich. Die Gewindetiefe ist umso geringer, je stärker die Ausbauchung des Kerns ausgebildet ist.

Ein durch die gesamte Länge der Längsachse geführter Querschnitt ist ein Querschnitt, welcher die Längsachse als eine Gerade abbildet und nicht quer zur Längsachse verläuft. Ein quer zur Längsachse verlaufender Querschnitt würde die Längsachse als Punkt abbilden.

Unter einem scharfkantig ausgebildeten Außengewinde wird ein Außengewinde verstanden, dessen Gewindeflanke im Querschnitt einen spitzen Winkel ausbildet. Ein trapezoidartig ausgebildetes Außengewinde kann im Sinne der Erfindung entweder ein Trapezgewinde sein, bei welchem das Profil der Gewindegänge die Form eines gleichschenkligen oder eines nicht-gleichschenkligen Trapezes aufweist, oder ein Gewinde sein, bei welchem die Gewindeflanke zumindest flach und in einem beliebigen durch die gesamte Länge der Längsachse geführten Querschnitt parallel zur Längsachse ausgebildet ist.

Die Erfinderin der vorliegenden Patentanmeldung hat erkannt, dass eine im Stand der Technik bekannte kegelstumpfförmige Ausbildung eines Dentalimplantats nicht erforderlich und sogar nachteilig ist. Untersuchungen des jeweils zum Einbringen eines Dentalimplantats in eine Ausnehmung des Kieferknochens erforderlichen Drehmoments haben ergeben, dass ein kegelstumpfförmiges Dentalimplantat ein verhältnismäßig hohes Drehmoment erfordert. Beim Einbringen eines solchen Dentalimplantats wird das maximale Drehmoment erreicht, wenn die Gewindeteile des Koronalbereichs, welche den größten Außendurchmesser aufweisen, in die Kortikalis des Kieferknochens eingeschraubt werden. Dabei wird der Knochen an dieser Stelle stark komprimiert und dadurch dessen Durchblutung vermindert. Dies kann zu einem Absterben und damit einem Abbau des Knochens an dieser Stelle führen.

Im Gegensatz dazu führt das erfindungsgemäße Dentalimplantat zu einer geringeren mechanischen Beanspruchung der Kortikalis des Kieferknochens beim Einsetzen des Implantats, weil eine geringere Kompression des Knochens im Bereich der Kortikalis erfolgt. Gleichzeitig wird jedoch eine hohe Festigkeit des Implantats im Kieferknochen aufgrund der Ausbauchung im Mittelbereich und der dadurch erfolgenden Kompression in einem tieferen Bereich des Kieferknochens erreicht. Durch die Ausbauchung des Kerns, ohne dass die Außenkontur des Implantats ebenfalls ausgebaucht ist, muss im Kortikalisbereich des Kieferknochens relativ wenig Knochen entfernt werden, um das Dentalimplantat einsetzen zu können. Im Vergleich zu herkömmlichen Implantaten wird der maximale Durchmesser des Kerns dadurch in den Bereich der gut komprimierbaren Spongiosa des Kieferknochens verlagert. Durch das trapezoidartig ausgebildete Außengewinde im Mittelbereich erfolgt eine zusätzliche Kompression und kein Einschneiden in den Knochen. Bei dem Außengewinde handelt sich also um ein komprimierendes und nicht um ein schneidendes Gewinde. So erfolgt auch keine Verletzung der Alveoleninnenkompakta im Falle einer Sofortimplantation in eine nach Entfernung eines Zahns gebildete Extraktionsalveole. Bei einer solchen Sofortimplantation kommt der Mittelbereich vorteilhafterweise so zu liegen, dass die Alveoleninnenkompakta, die kortikale Auskleidung des knöchernen Zahnfaches, optimal zur Fixierung des Implantates genutzt wird. Das erfindungsgemäße Dentalimplantat ermöglicht so eine ideale Einheilung des Implantats sowohl in Extraktionsalveolen als auch im abgeheilten Kieferknochen. Dennoch wird durch das erfindungsgemäße Dentalimplantat auch bereits direkt nach dem Einsetzen eine hohe Primärstabilität erreicht, ohne die Kortikalis des Kieferknochens zu überlasten. Dies gilt selbst dann, wenn es zu einer idealen Positionierung des Implantats erforderlich sein sollte, das Dentalimplantat wieder etwas aus dem Kieferknochen herauszuschrauben. Bei den im Stand der Technik bekannten kegelstumpfförmigen Dentalimplantaten ist dies nicht der Fall.

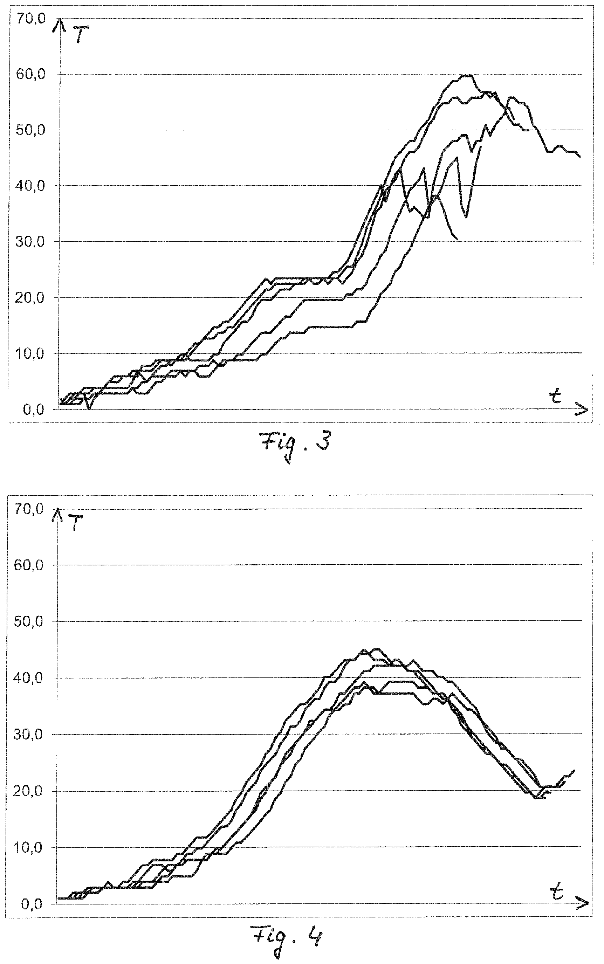

Eine beispielsweise aus Fig. 4 ersichtliche Drehmomentkennlinie beim Einsetzen des Implantats in den Kieferknochen verläuft beim erfindungsgemäßen Dentalimplantat besonders vorteilhaft und vereinfacht eine gute Implantatpositionierung in Bezug auf die Insertionstiefe, da das maximale Drehmoment erreicht wird, wenn der Mittelteil des Dentalimplantats die kortikale Platte passiert und nicht erst dann, wenn der Koronalbereich des Dentalimplantats mit dem kortikalen Knochen in Eingriff gelangt.

Der Spitzenbereich des Dentalimplantats umfasst üblicherweise 2 bis 3 Gewindegänge. Der Mittelbereich mit dem trapezoidartigen und damit gegenüber dem Außengewinde des Spitzenbereichs stumpferen Außengewinde weist üblicherweise 4 bis 5 Gewindegänge auf. Der sich daran anschließende Koronalbereich kann 2 bis 3 Gewindegänge umfassen. Die genannten Bereiche bilden üblicherweise einen einstückigen Implantatkörper.

Bei einer Ausgestaltung des erfindungsgemäßen Dentalimplantats ist der Nenndurchmesser des Außengewindes im gesamten den Spitzenbereich, den Mittelbereich und den Koronalbereich umfassenden Bereich gleich oder in Richtung vom apikalen Ende zum zervikalen Ende hin zunehmend.

Bei dem Metall kann es sich um Titan handeln. Die Metalllegierung kann Titan umfassen und zum Beispiel eine Titan-Zirkonium-Legierung sein.

Die Ausbauchung des Kerns im Mittelbereich bedeutet, dass der Kern, gesehen aus einer Richtung der Längsmittelachse, eine nach außen gerichtete Ausbauchung aufweist, so dass der Mittelbereich gegenüber dem Spitzenbereich und dem Koronalbereich massiver ausgebildet ist. Dabei ist es möglich, dass an die Außenform des Dentalimplantats, d. h. an die Außenseite des Außengewindes, auf gegenüberliegenden Seiten angelegte Geraden zum apikalen Ende hin konvergieren oder parallel zueinander verlaufen.

Aufgrund der ausgebauchten Ausbildung des Kerns im Mittelteil ist es möglich, dass der Kern im Spitzenbereich und im Koronalbereich im Vergleich zum Mittelbereich verjüngt ausgebildet ist. Das bedeutet, dass der Spitzenbereich und der Koronalbereich weniger massiv als der Mittelbereich ausgebildet sein können.

Bei einer weiteren Ausführungsform schließt sich an den Koronalbereich ein Endbereich an, in den über eine Innen- oder Außenverbindung mit einem Innengewinde ein Aufbauteil bzw. eine prothetische Suprakonstruktion eingeschraubt werden kann.

Ferner ist es möglich, dass die Gewindetiefe im Spitzenbereich und im Koronalbereich größer ist, als im Mittelbereich.

Bei einer weiteren Ausgestaltung des erfindungsgemäßen Dentalimplantats sind das Außengewinde und der Kern einstückig ausgebildet. Dazu kann das Dentalimplantat als Drehteil in spanabhebender Bearbeitung hergestellt werden. Dabei ist es auf besonders einfache Art möglich, die ineinander übergehenden ungleichen Außengewinde des Spitzenbereichs, des Mittelbereichs und des Koronalbereichs, insbesondere in einem einzigen Arbeitsgang, auszubilden. Außerdem kann auch die Ausbauchung im Mittelbereich verhältnismäßig einfach hergestellt werden.

Die Erfindung betrifft weiterhin ein spanabhebendes Verfahren zu Herstellung des erfindungsgemäßen Dentalimplantats durch Drehen eines Drehteils aus einem Material, welches ein Metall oder eine Metalllegierung umfasst, wobei in das Drehteil mittels eines Schneidwerkzeugs das Außengewinde geschnitten wird, wobei die Ausbauchung im Mittelbereich durch Verändern des Abstands eines Schneidbereichs des Schneidwerkzeugs zur mit der Längsachse zusammenfallenden Drehachse erzeugt wird. Gleichzeitig mit der Ausbauchung kann so in einem einzigen Arbeitsgang das trapezoidartig ausgebildete Außengewinde erzeugt werden. Es ist auch möglich, die ineinander übergehenden ungleichen Außengewinde des Spitzenbereichs, des Mittelbereichs und des Koronalbereichs zusammen mit der Ausbauchung in einem einzigen Arbeitsgang zu erzeugen.

Weitere Einzelheiten und Merkmale ergeben sich aus nachfolgender Beschreibung eines Ausführungsbeispiels und anhand der Zeichnungen. Darin zeigt:
- Fig. 1: eine vergrößerte Ansicht auf eine Ausführungsform eines erfindungsgemäßen Dentalimplantats,
- Fig. 2: eine Schnittdarstellung des Dentalimplantats gemäß Fig. 1 entlang der Linie A-A in Fig. 1,
- Fig. 3: ein Drehmomentdiagramm eines herkömmlichen kegelstumpfförmigen Dentalimplantats, und
- Fig. 4: ein Drehmomentdiagramm des erfindungsgemäßen Dentalimplantats während der Implantatinsertion.

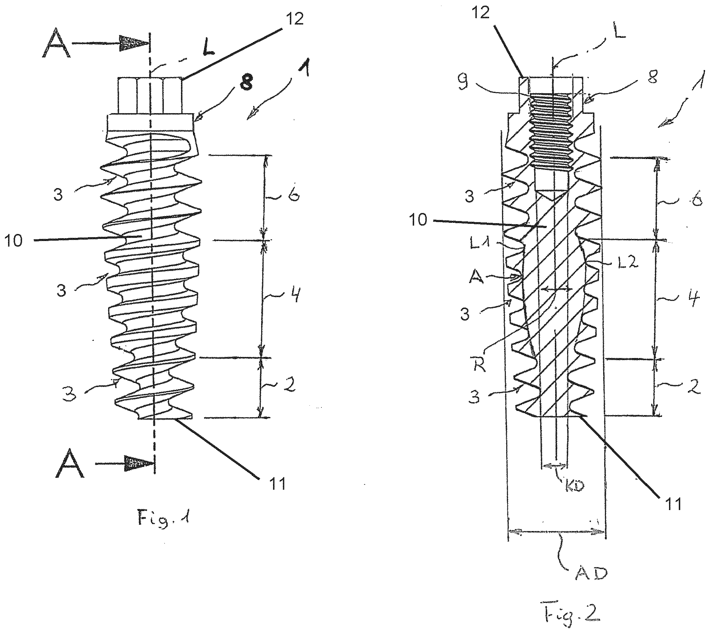

Aus einer Zusammenschau der Figuren 1 und 2 ergibt sich der Aufbau eines beispielhaften erfindungsgemäßen Dentalimplantates 1, das einen Kern 10 und einen den Kern umgebendes Außengewinde 3 umfasst. Das Dentalimplantat weist einen Spitzenbereich 2 auf, der mit einem scharfkantigen Außengewinde 3 versehen ist und der zumindest leicht konisch ausgebildet sein kann.

An den Spitzenbereich 2 schließt sich ein Mittelbereich 4 an, der mit einem trapezoidartigen Außengewinde 3 versehen ist, welches stumpfer ausgebildet ist als das Außengewinde 3 des Spitzenbereichs 2.

An den Mittelbereich 4 wiederum schließt sich ein Koronalbereich 6 an, der wiederum mit einem scharfkantigen Außengewinde 3 versehen ist, welches mithin scharfkantiger als das Außengewinde 3 im Mittelbereich 4 ist und vorzugsweise genauso scharfkantig ausgebildet ist wie das Außengewinde 3 im Spitzenbereich 2.

Die Zusammenschau der Figuren 1 und 2 verdeutlicht hierbei, dass sich durch den Spitzenbereich 2, den Mittelbereich 4 und den Koronalbereich 6 eine Längsachse L durch das Dentalimplantat erstreckt.

Zusätzlich verdeutlicht die Schnittdarstellung der Fig. 2, dass der Spitzenbereich 2, der Mittelbereich 4, der Koronalbereich 6 und ein sich an diesen anschließender Endbereich 8, der ein Innengewinde 9 aufweist, ein einstückiges Bauteil bilden.

Ferner zeigt die Schnittdarstellung der Fig. 2, dass der Mittelbereich 4 mit einer nach außen gerichteten Ausbauchung A versehen ist. Diese Ausbauchung A ist in Fig. 2 durch die Linien L1 und L2 verdeutlicht, die die Fußbereiche des Außengewindes 3 miteinander verbinden, wobei sich die Richtung nach außen aus der Darstellung des Doppelpfeiles R ergibt, der von der Längsachse L ausgeht und dessen Pfeilspitzen nach außen auf die Linien L1 und L2 weisen. Anders ausgedrückt bedeutet dies, dass sich die Ausbauchung A dadurch ergibt, dass die Linien L1 und L2 relativ zu einem Kerndurchmesser KD des Dentalimplantats 1 nach außen in Richtung auf einen Außendurchmesser AD des Dentalimplantats 1 hin gewölbt sind.

Dementsprechend ist der Spitzenbereich 2 und der Koronalbereich 6 gegenüber dem ausgebauchten Mittelbereich 4 verjüngt ausgebildet, was bedeutet, dass diese Bereiche 2 und 6 weniger massiv sind.

Ein Vergleich der Diagramme gemäß Fig. 3 und gemäß Fig. 4 verdeutlicht, dass die in Fig. 4 dargestellten Drehmomentverläufe beim Einschrauben eines erfindungsgemäßen Dentalimplantats 1 einen maximalen Drehmomentbereich zeigen, wenn der Mittelbereich 4 die Kortikalis passiert, was zu den eingangs erläuterten besonderen Vorteilen des erfindungsgemäßen Dentalimplantats 1 führt. Im Gegensatz dazu zeigen die in Fig. 3 dargestellten Drehmomentverläufe beim Einschrauben eines herkömmlichen kegelstumpfförmigen Dentalimplantats einen maximalen Drehmomentbereich in der Endphase des Einschraubens, wenn die maximale Ausdehnung des Kegelstumpfs in die Kortikalis eingeschraubt wird und diese dadurch stark komprimiert. Damit sind die oben genannten Nachteile verbunden.

### Bezugszeichenliste

- 1: Dentalimplantat
- 2: Spitzenbereich
- 3: Außengewinde
- 4: Mittelbereich
- 6: Koronalbereich
- 8: Endbereich
- 9: Innengewinde
- 10: Kern
- 11: apikales Ende
- 12: zervikales Ende
- A: Ausbauchung
- L: Längsachse
- L1, L2: Linien zur Verdeutlichung der Ausbauchung A
- R: Doppelpfeil ausgehend von der Längsachse L
- AD: Außendurchmesser
- KD: Kerndurchmesser

## Patentansprüche

1. Dentalimplantat (1) zum Verankern einer Zahnprothese, wobei das Dentalimplantat (1) einen Kern (10) und ein den Kern (10) umgebendes Außengewinde (3) umfasst, wobei das Dentalimplantat (1) ein apikales Ende (11) und ein zervikales Ende (12) aufweist, um mit dem apikalen Ende (11) voran mittels des Außengewindes (3) in eine in einem Kieferknochen gebildete Ausnehmung eingeschraubt zu werden und um die Zahnprothese am zervikalen Ende (12) zu verankern, wobei das Dentalimplantat (1) aus Material besteht, welches ein Metall oder eine Metalllegierung umfasst oder daraus besteht, wobei das Dentalimplantat (1) in der Reihenfolge vom apikalen Ende (11) zum zervikalen Ende (12)
- einen Spitzenbereich (2), in welchem das Außengewinde (3) scharfkantig ausgebildet ist,
- einen sich an den Spitzenbereich (2) anschließenden Mittelbereich (4), in welchem das Außengewinde (3) trapezoidartig ausgebildet ist und
- einen sich an den Mittelbereich (4) anschließenden Koronalbereich (6), in welchem das Außengewinde (3) scharfkantig ausgebildet ist,
umfasst, wobei sich durch den Spitzenbereich (2), den Mittelbereich (4) und den Koronalbereich (6) eine Längsachse (L) erstreckt, wobei der Kern (10) in einem beliebigen durch die gesamte Länge der Längsachse (L) geführten Querschnitt im Mittelbereich (4) eine Ausbauchung (A) aufweist, während das Außengewinde (3) einen Nenndurchmesser aufweist, welcher im gesamten Mittelbereich konstant ist oder im gesamten Mittelbereich in Richtung vom apikalen Ende (11) zum zervikalen Ende (12) hin zunimmt.

2. Dentalimplantat (1) nach Anspruch 1, wobei der Nenndurchmesser des Außengewindes (3) im gesamten den Spitzenbereich (2), den Mittelbereich (4) und den Koronalbereich (6) umfassenden Bereich gleich ist oder in Richtung vom apikalen Ende (11) zum zervikalen Ende (12) hin zunimmt.

3. Dentalimplantat (1) nach Anspruch 1 oder 2, wobei eine Gewindetiefe im Spitzenbereich (2) und im Koronalbereich (6) größer ist, als im Mittelbereich (4).

4. Dentalimplantat (1) nach einem der vorhergehenden Ansprüche, wobei das Metall Titan ist und die Metalllegierung Titan umfasst.

5. Dentalimplantat (1) nach einem der vorhergehenden Ansprüche, wobei sich an den Koronalbereich (6) ein Endbereich (8) anschließt.

6. Dentalimplantat (1) nach Anspruch 5, wobei der Endbereich (8) eine Au-ßen-oder Innenverbindung und ein Innengewinde (9) aufweist.

7. Dentalimplantat (1) nach einem der vorhergehenden Ansprüche, wobei das Außengewinde (3) und der Kern (10) einstückig ausgebildet sind.

8. Verfahren zu Herstellung des Dentalimplantats (1) nach einem der vorhergehenden Ansprüche durch Drehen eines Drehteils aus einem Material, welches ein Metall oder eine Metalllegierung umfasst, wobei in das Drehteil mittels eines Schneidwerkzeugs das Außengewinde (3) geschnitten wird, wobei die Ausbauchung (A) im Mittelbereich (4) durch Verändern eines Abstands eines Schneidbereichs des Schneidwerkzeugs zur mit der Längsachse (L) zusammenfallenden Drehachse erzeugt wird.
